# EUROPÄISCHE PATENTANMELDUNG

(11) **EP 0 911 936 A1**
(43) Veröffentlichungstag der Anmeldung: **28.04.1999**
(21) Anmeldenummer: 98117703.3
(22) Anmeldetag: 18.09.1998
(51) Int. Cl.: H02G 15/103, H02G 15/184

(54) **Kabelendverschluss oder Kabelmuffe mit geometrischer Feldsteuerung**

(30) Priorität: 21.10.1997 DE 19746313
(71) Anmelder: ABB PATENT GmbH, 68309 Mannheim (DE)
(72) Erfinder: Leonhardt, Gottfried, Dipl-Ing., 68723 Oftersheim (DE)
(74) Vertreter: Miller, Toivo

(57) **Zusammenfassung**

Es werden ein Kabelendverschluß oder eine Kabelmuffe mit einem Isolierkörper vorgeschlagen, in den ein Feldsteuerelement aus einem elektrisch leitfähigem Material eingelegt ist. Das Feldsteuerelement ist zweiteilig oder dreiteilig und zusammensteckbar ausgebildet, bestehend aus einem für mehrere unterschiedliche Kabeldurchmesser gleichen, ringförmigen Grundelement (2) und einem bzw. zwei schlauchförmigen Zusatzelementen (3, 12), deren Innendurchmesser dem jeweiligen Kabeldurchmesser angepaßt und die in Wüste (9, 11) des Grundelementes einsteckbar sind. Hierdurch kann für Kabelendverschlüsse und Kabelmuffen für unterschiedliche Kabeldurchmesser gestuft stets das gleiche, relativ kompliziert ausgebildete Grundelement (2) des Feldsteuerelementes verwendet werden. Die Anpassung an den jeweiligen Kabeldurchmesser erfolgt ausschließlich durch die relativ einfach ausgebildeten Zusatzelemente (3, 12).

## Beschreibung

Die Erfindung bezieht sich auf einen Kabelendverschluß oder eine Kabelmuffe mit geometrischer Feldsteuerung gemäß dem Oberbegriff der nebengeordneten Ansprüche 1 und 2.

Aus der Druckschrift KUD 1095 D (4.96/2) WDW 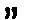 Steckendverschlüsse und Zubehör für Innenkonus- und Außenkonussysteme 12 - 36 kV" der ABB Kabel und Draht GmbH, Seiten 12, 13 und 17 sind Steckendverschlüsse für den Anschluß eines Kabels an ein elektrisches Gerät (beispielsweise an eine gekapselte Schaltanlage) bekannt. Derartige Steckendverschlüsse (allgemein Kabelendverschlüsse) weisen einen Isolierkörper auf, in den mindestens eine aus einem elektrisch leitfähigen Material bestehende Glättungselektrode (allgemein ein Feldsteuerelement) eingelegt ist. Diese Glättungselektrode dient der geometrischen Feldsteuerung und umschließt den Leiteranschlußbereich innerhalb des Steckendverschlusses.

Dabei ist es üblich, sowohl den Isolierkörper als auch das Feldsteuerelement in Stufen an den jeweiligen Kabeldurchmesser bzw. Kabelquerschnitt des Anwendungsfalles anzupassen. Für verschiedene Garniturengrößen gibt es somit ein eigenes Feldsteuerelement. Bei Fertigung des Feldsteuerelementes aus einem elektrisch leitfähigem Elastomer sind deshalb viele unterschiedliche Herstellungsformen erforderlich. Da diese Feldsteuerelemente zudem für gerade, L-förmige und T-förmige Kabelendverschlüsse unterschiedlich auszubilden sind, ergibt sich eine Vielzahl unterschiedlicher zu produzierender Feldsteuerelemente mit unterschiedlichen Abmessungen.

Der Erfindung liegt die Aufgabe zugrunde, einen Kabelendverschluß oder eine Kabelmuffe mit geometrischer Feldsteuerung der eingangs genannten Art anzugeben, welcher bzw. Welche eine kostengünstige Fertigung ermöglicht.

Diese Aufgabe wird alternativ in Verbindung mit den Merkmalen des Oberbegriffes erfindungsgemäß durch die im Kennzeichen der Ansprüche 1 und 2 angegebenen Merkmale gelöst.

Die mit der Erfindung erzielbaren Vorteile bestehen insbesondere darin, daß für Kabelendverschlüsse und Kabelmuffen unterschiedlichen Kabeldurchmessers stets das gleiche, relativ kompliziert ausgebildete Grundelement des Feldsteuerelementes verwendet werden kann. Zur Fertigung des Grundelementes aus einem Elastomer ist nur noch eine einzige Gießform erforderlich. Die Anpassung an den jeweiligen Kabeldurchmesser erfolgt ausschließlich durch unterschiedliche, relativ einfach ausgebildete Zusatzelemente. Durch dieses Baukastensystem werden die Fertigungskosten gesenkt, da beispielsweise das Grundelement in höheren Stückzahlen produziert werden kann. Es muß nicht mehr in nachteiliger Weise für jeden Kabeldurchmesser ein unterschiedliches einstückiges Feldsteuerelement hergestellt werden, was relativ hohe Formkosten infolge des Einsatzes unterschiedlicher, kompliziert gestalteter Herstellungsformen verursacht.

Die Erfindung wird nachstehend anhand der in der Zeichnung dargestellten Ausführungsbeispiele erläutert. Es zeigen:
Fig. 1 einen Schnitt durch den Isolierkörper eines Kabelendverschlusses,
Fig. 2 einen Schnitt durch den Isolierkörper einer Kabelmuffe.

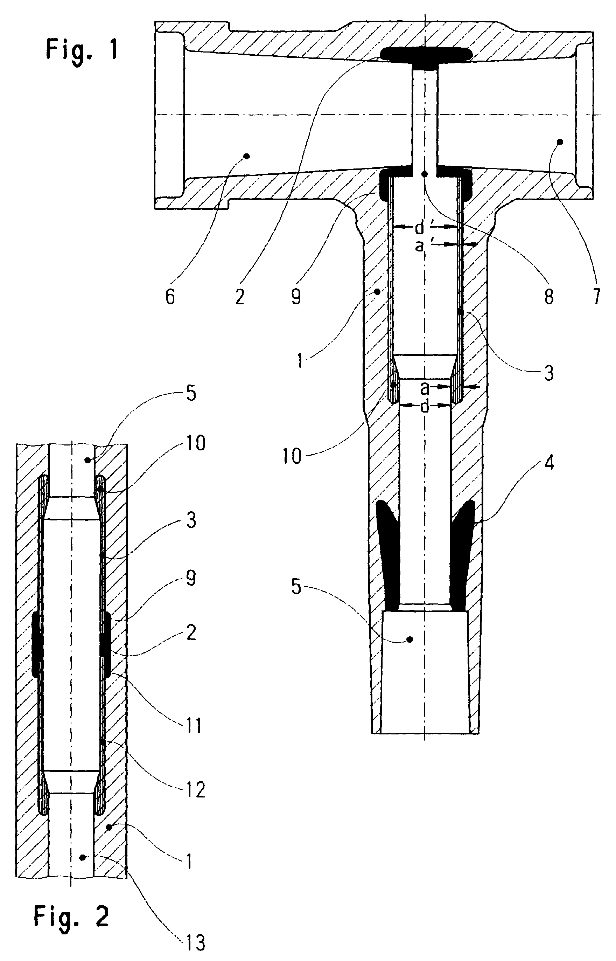

In Fig. 1 ist ein Isolierkörper 1 im Querschnitt zu erkennen. Dabei handelt es sich beispielhaft um einen aus Silikonkautschuk bestehenden Isolierkörper für einen T-förmigen Kabelendverschluß, die Erfindung ist jedoch in gleicher Weise für L-förmige oder gerade Kabelendverschlüsse oder für Kabelmuffen verwendbar. Der Isolierkörper 1 weist drei Öffnungen auf, nämlich eine Öffnung 5 zur Einführung eines Kabels, eine Öffnung 6 zur Aufnahme der in diesem Zusammenhang nicht weiter interessierenden Steckmechanik und eine für ein Abschlußstück geeignete Öffnung 7.

Zur geometrischen Feldsteuerung weist der Isolierkörper 1 eine im weiteren Zusammenhang nicht weiter interessierende Steuerelektrode 4 (aus einem elektrisch leitfähigen Material) im Endbereich der Öffnung 5 sowie ein zweiteilig ausgebildetes Feldsteuerelement auf. Das Feldsteuerelement besteht aus einem ringförmigen Grundelement 2 und einem schlauchförmigen Zusatzelement 3. Beide Elemente sind aus einem elektrisch leitfähigem Material, vorzugsweise aus einem Elastomer, hergestellt. Insbesondere dient ein elektrisch leitfähiger Silikonkautschuk für die Fertigung mittels Gießform.

Das ringförmige Grundelement 2 kleidet diejenige Zone der Öffnungen 6, 7 aus, welche sich im Bereich der Einmündung der Öffnung 5 in diese Öffnungen 6, 7 befindet. Die besagte Einmündung selbst erfolgt durch eine Öffnung 8 in der Wandung des Grundelementes 2. Ringförmig um diese Öffnung 8 weist das Grundelement 2 einen Wulst 9 auf, welcher zum Einstecken des Zusatzelementes 3 geeignet ist. Die Kanten des ringförmigen Zusatzelementes 3 inklusive der Kanten des Wulstes 9 sind gemäß den Erfordernissen der elektrischen Feldsteuerung ausgebildet.

Das schlauchförmige Zusatzelement 3 greift mit seinem einen Endbereich in den ringförmigen Wulst 9 ein. Der weitere Endbereich des Zusatzelementes weist eine ringförmige Verdickung 10 mit abgerundeter Kante auf.

Das in der Figur gezeigte Ausführungsbeispiel betrifft einen Kabelendverschluß für ein Kabel mit einem relativ großem Kabeldurchmesser und damit einem entsprechend großen Innendurchmesser d des Isolierkörpers 1. Bei Ausführungsformen mit kleinerem Kabeldurchmesser wird das gleiche Grundelement 2 verwendet, während das Zusatzelement 3 eine größere Wandstärke a aufweist, um den geringeren Innendurchmesser d zu realisieren. Eventuelle Anpassungen des Durchmessers d' und/oder der Wandstärke a' sind hiervon unberührt. Der Außendurchmesser des Zusatzelementes 3 bleibt jedoch unverändert, wodurch für die verschiedenen Ausführungsgrößen sichergestellt ist, daß stets das gleiche Grundelement 2 herangezogen werden kann.

Wie bereits vorstehend angedeutet ist, kann das aus einem Grundelement und je nach Kabeldurchmesser unterschiedlichen Zusatzelementen bestehende Feldsteuerelement 2+3 nicht nur bei Kabelendverschlüssen in T-Form, sondern auch bei geraden oder L-förmigen Kabelendverschlüssen und bei Kabelmuffen Verwendung finden. Bei geraden Kabelendverschlüssen und bei Kabelmuffen weist das Grundelement 2 selbstverständlich die Öffnung 8 nicht auf, sondern der Wulst 9 ist unmittelbar an die zum Kabel gerichtete Ringkante angeformt. Bei Kabelmuffen weist das Grundelement an seinen beiden Ringkanten entsprechende Wülste auf, welche zum Einstecken von Zusatzelementen zu beiden Seiten des Zusatzelementes dienen, d. h. das Feldsteuerelement ist bei Kabelmuffen nicht zwei- sondern dreiteilig ausgebildet.

ln Fig. 2 ist hierzu ein Schnitt durch den Isolierkörper einer Kabelmuffe dargestellt. Die Öffnungen des Isolierkörpers 1 zum Einführen der beiden zu verbindenden Kabel sind mit den Ziffern 5, 13 bezeichnet. Das ringförmige Grundelement 2 weist an seinen beiden Ringkanten Wüste 9, 11 auf, welche die beidseitig des Grundelementes eingesteckten Zusatzelemente 3, 12 überdecken. Die Kanten der Wülste 9, 11 sowie der Verdickungen 10 der Zusatzelemente 3, 12 sind abgerundet.

## Patentansprüche

1. Kabelendverschluß mit einem Isolierkörper, in den mindestens ein Feldsteuerelement aus einem elektrisch leitfähigem Material eingelegt ist, dadurch gekennzeichnet, daß das Feldsteuerelement zweiteilig ausgebildet ist, bestehend aus einem für mehrere unterschiedliche Kabeldurchmesser gleichen, ringförmigen Grundelement (2) und einem schlauchförmigen Zusatzelement (3), dessen Innendurchmesser (d) dem jeweiligen Einsatzfall angepaßt ist, wobei das Zusatzelement (3) in einen ringförmigen Wulst (9) des Grundelementes (2) einsteckbar ist.

2. Kabelmuffe mit einem Isolierkörper, in den mindestens ein Feldsteuerelement aus einem elektrisch leitfähigem Material eingelegt ist, dadurch gekennzeichnet, daß das Feldsteuerelement dreiteilig ausgebildet ist, bestehend aus einem für mehrere unterschiedliche Kabeldurchmesser gleichen, ringförmigen Grundelement (2) und zwei schlauchförmigen Zusatzelementen (3, 12), deren Innendurchmesser (d) dem jeweiligen Ensatzfall angepaßt ist, wobei die Zusatzelemente (3) in ringförmige Wülste (9, 11) des Grundelementes (2) einsteckbar sind.

3. Kabelendverschluß oder Kabelmuffe nach Anspruch 1 oder 2, dadurch gekennzeichnet, daß das Grundelement (2) und das Zusatzelement (3, 12) aus einem elektrisch leitfähigen Elastomer gefertigt sind.
